# EUROPEAN PATENT SPECIFICATION

(11) **EP 3 639 702 B1**
(45) Date of publication and mention of the grant of the patent: **09.03.2022**
(21) Application number: 19202169.9
(22) Date of filing: 09.10.2019
(51) Int. Cl.: A47D 13/06, A47D 5/00, A47D 7/03, A47D 9/00

(54) **CHILD-CONTAINMENT DEVICE**
KINDERSICHERUNGVORRICHTUNG
DISPOSITIF DE RETENUE POUR ENFANTS

(30) Priority: 15.10.2018 US 201862745668 P
(43) Date of publication of application: 22.04.2020
(73) Proprietor: Kids2, Inc., Atlanta, Georgia 30305-1712 (US)
(72) Inventor: THRIFT, David, Alpharetta, Georgia 30009 (US); BURNS, Stephen, Cumming, Georgia 30041 (US); SCLARE, Jacob, Dacula, Georgia 30019 (US); POON, Yuk Tong, 1234 Yoho Midtown, Yuen Long (HK)
(74) Representative: Haseltine Lake Kempner LLP

(56) References cited:
- EP-A1- 3 085 574
- FR-A1- 2 604 345
- US-A1- 2012 042 447
- US-A1- 2012 211 713

## Description

### Technical Field

The present disclosure relates generally to the field of infants' and children's accessories, and more particularly to systems and methods for raising and lowering support surfaces of baby gear such as play yards, sleepers, diaper-changing stations, and other fabric-walled enclosures for infants and children.

### Background

Play yards are often used by parents and caregivers to provide a partially contained space for an infant or child to rest and play. Typically, a play yard includes a structural frame supporting a floor panel and sidewalls surrounding the contained space. Additional accessories such as a bassinet, changing table, and/or storage compartments can optionally be mounted to or supported by a play yard. Typically, play yards only function as a play yard, but can be configured with additional accessories, for example to provide a second floor panel or surface that is generally offset from the floor panel of the play yard, or can receive additional accessories that are generally coupled to the play yard.

There are some play yards with support surfaces and with mechanisms for raising and lowering the support surfaces. However, known elevator mechanisms can be problematic in several ways. These elevator systems generally result in the play yard having more components, higher cost, more complicated assembly, and complicated operation. They also create challenges with fabric bunching and wrinkling, or excess fabric creating a tripping hazard. Additionally, the user has to bear the weight of the support surface (and/or infants and/or objects supported by the surface) during the raising and lowering. Further, they provide a finite number of discrete height positions (due to their lock-and-key mechanisms). And the enclosure sides are typically either too sheer for sleep or not sheer enough to provide sufficient parent-to-child visibility during play.

Accordingly, it can be seen that needs exist for continuing improvements in this field of endeavor. It is to the provision of an elevator height adjustment system and method meeting these and other needs that the present disclosure is primarily directed.

EP3085574, US2012211713, US2012042447 and FR2604345 disclose prior art bassinets/play yards with mechanisms for adjusting the height of the floor.

### Summary

In example embodiments, the present disclosure provides a child-containment device having the features of claim 1 below. Optional features are set out in the dependent claims.

These and other aspects, features and advantages of the invention will be understood with reference to the drawing figures and detailed description herein, and will be realized by means of the various elements and combinations particularly pointed out in the appended claims. It is to be understood that both the foregoing general description and the following brief description of the drawings and detailed description of the example embodiments are exemplary and explanatory of preferred embodiments, and are not restrictive of the invention, as claimed.

### Brief Description of the Drawings

**Figure 1** is a perspective view of a play yard having a depth-adjustable fabric enclosure according to an example which does not embody the invention, showing the play yard in an expanded use configuration and a floor portion of the depth-adjustable fabric is positioned at a first floor position.
**Figure 2** is a perspective view of the play yard of **Figure 1****,** showing the play yard in a compact or folded configuration for storage and transport.
**Figure 3** is a perspective view of a support frame of the play yard of **Figure 1****,** wherein the support frame is in the expanded configuration.
**Figure 4** is a perspective view of the support frame of **Figure 3****,** wherein the support frame is in the collapsed configuration.
**Figure 5** is a perspective view of the depth-adjustable fabric enclosure of **Figure 1****,** wherein the depth-adjustable fabric enclosure is in a relaxed, natural, non-stretched state.
**Figure 6** is another perspective view of the play yard of **Figure 1****.**
**Figure 7** is a perspective view of the play yard of **Figure 6****,** wherein the depth-adjustable fabric enclosure is configured as bassinet according to another example which does not embody the invention, with the floor of the depth-adjustable fabric enclosure positioned at a second floor position.
**Figure 8** is a perspective view of the play yard of **Figure 6****,** wherein the depth-adjustable fabric enclosure is configured as a sleeper, according to another example which does not embody the invention, with the floor of the depth-adjustable fabric enclosure positioned at a third floor position.
**Figure 9** shows a cross-sectional view of an upper portion of the depth-adjustable fabric enclosure folded and engaged with the support frame of **Figure 7** taken along line **9-9**
**Figure 10** is a top plan view of a mattress for use with the depth-adjustable fabric enclosure of **Figure 1** according to an example which does not embody the invention.
**Figure 11** is a side plan view of the depth-adjustable fabric enclosure and the mattress of **Figure 1****,** showing the movement and positioning of the mattress between the first and the second floor positions.
**Figure 12** shows a top plan view of a mattress for use with the depth-adjustable fabric enclosure of **Figure 1** according to another example which does not embody the invention.
**Figure 13** is a perspective view of a play yard having a depth-adjustable fabric enclosure according to another example which does not embody the invention, wherein a floor portion of the depth-adjustable fabric is positioned at a first floor position.
**Figure 14** is a perspective view of the play yard of **Figure 13****,** showing the depth-adjustable fabric enclosure configured as a bassinet, according to another example which does not embody the invention, with the floor of the depth-adjustable fabric enclosure is positioned at a second floor position.
**Figure 15** is a perspective view of a play yard having a depth-adjustable fabric enclosure according to another example which does not embody the invention, wherein a floor portion of the depth-adjustable fabric is positioned at a first floor position.
**Figure 16** is a perspective view of the play yard of **Figure 15****,** showing the depth-adjustable fabric enclosure configured as a bassinet, according to another example which does not embody the invention, with the floor of the depth-adjustable fabric enclosure positioned at a second floor position.
**Figure 17** shows a cross-sectional view of a portion of the support frame of **Figure 16** taken along line **17-17.**
**Figure 18** shows a side plan view of a play yard having a depth-adjustable fabric enclosure according to another example which does not embody the invention, wherein a floor portion of the depth-adjustable fabric is positioned at a first floor position.
**Figure 19** shows a side plan view of the play yard of **Figure 18****,** showing the depth-adjustable fabric enclosure configured as a bassinet, according to another example which does not embody the invention, with the floor of the depth-adjustable fabric enclosure positioned at a second floor position.
**Figure 20** shows a perspective assembly view of a play yard according to another example which does not embody the invention, showing a sleeve connected to an upper portion of a structural support frame and having fasteners for coupling engagement with a depth-adjustable fabric enclosure.
**Figure 21** is a perspective view of a child enclosure having a floor and an elevator height adjustment device according to an example embodiment.
**Figure 22** is a cross-sectional view of the child enclosure of **Figure 21** configured as a play yard with the floor in a first/lowered floor position.
**Figure 23** is a cross-sectional view of the child enclosure of **Figure 21** configured as a sleeper with the floor in a second/intermediate floor position.
**Figure 24** is a cross-sectional view of the child enclosure of **Figure 21** configured as a diaper-changing station with the floor in a third/raised floor position.
**Figure 25A** **is** a detail side view of a portion of the child enclosure of **Figure 21** showing a locking mechanism for releasably securing the floor in the various positions.
**Figure 25B** is a detail side view of a portion of the child enclosure of **Figure 21** showing another locking mechanism for releasably securing the floor in the various positions.
**Figure 26** is a detail top view of a portion of the child enclosure of **Figure 21** showing a synchronization system for the flexible walls of adjacent sides of the enclosure.
**Figure 27** is a perspective view of a child enclosure having a floor and an elevator height adjustment device according to an embodiment, with an enlarged detail showing a top view of a corner portion of the child enclosure and also showing a perspective view of intermeshed gears of the elevator height adjustment device.
**Figure 28** is a cross-sectional view of a portion of the child enclosure of **Figure 25****,** showing details of the elevator height adjustment device.
**Figure 29A** **is** a detail side view of a portion of the child enclosure of **Figure 27** showing a locking mechanism for releasably securing the floor in the various positions with the locking mechanism in an unlocked/released position.
**Figure 29B** shows the child enclosure portion of **Figure 29A** with the locking mechanism in a locked/secured position.
**Figure 30** is a cross-sectional view of the child enclosure of **Figure 28** configured as a play yard with the floor in a first/lowered floor position.
**Figure 31** is a cross-sectional view of the child enclosure of **Figure 28** configured as a sleeper with the floor in a second/intermediate floor position.
**Figure 32** is a cross-sectional view of the child enclosure of **Figure 28** configured as a diaper-changing station with the floor in a third/raised floor position.
**Figure 33** is a perspective view of a window shade having an elevator height adjustment shade panel according to another example which does not embody the invention.
**Figure 34** is a side view of the window shade of **Figure 33****,** viewed from inside an enclosed space and looking out, in a first configuration for allowing more light to pass through.
**Figure 35** shows the window shade of **Figure 34** in a second configuration for allowing less light to pass through.
**Figure 36** is a perspective view of a display stand according to another example which does not embody the invention.

### Detailed Description of Example Embodiments

The present disclosure may be understood more readily by reference to the following detailed description of example embodiments taken in connection with the accompanying drawing figures, which form a part of this disclosure. It is to be understood that this disclosure is not limited to the specific devices, methods, conditions or parameters described and/or shown herein, and that the terminology used herein is for the purpose of describing particular embodiments by way of example only and is not intended to be limiting of the claimed invention.

Also, as used in the specification including the appended claims, the singular forms "a," "an," and "the" include the plural, and reference to a particular numerical value includes at least that particular value, unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment.

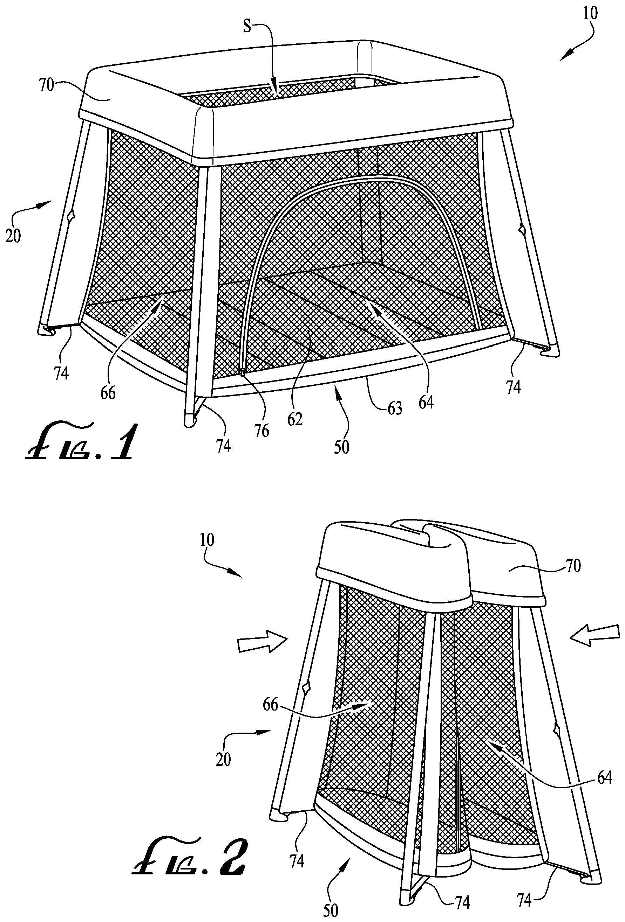

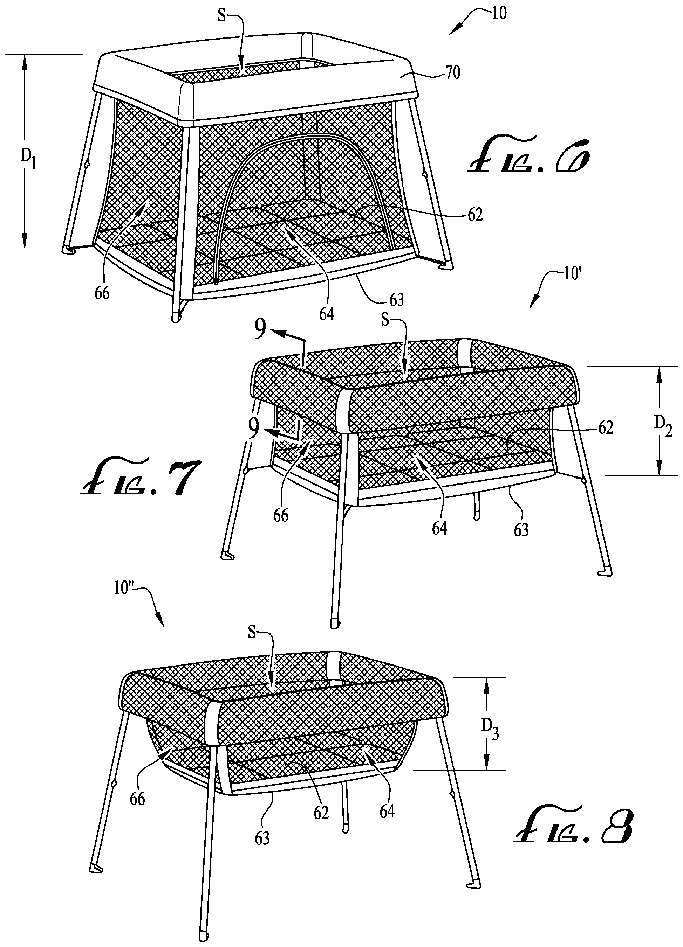

With reference now to the drawing figures, wherein like reference numbers represent corresponding parts throughout the several views, **Figures 1-8** show a child containment device comprising a structural support frame 20 and a depth-adjustable fabric enclosure or liner 50 generally attached to the frame 20. In examples, the depth-adjustable liner 50 is configured for ease of removal from the frame 20, for example to clean and replace the liner in ordinary usage of the child containment device. In alternative examples, the liner 50 can be configured for permanent attachment to the frame 20. Preferably, the depth-adjustable fabric liner 50 is configured to provide for adjustment to the depth of the floor or bottom of the liner (e.g., providing a plurality of different heights), for example, such that a bottom or floor portion of the liner 50 is adjustable between at least two different heights. As will be described below, the floor of the depth-adjustable fabric liner is preferably adjustable relative to the frame 20 between a first floor position, a second floor position, and a third floor position, for example, such that the child containment device is generally convertible between a play yard configuration 10 (see **Figures 1** and **6****),** a bassinet configuration 10' (see **Figure 7****),** and a sleeper configuration 10" (see **Figure 8****).**

In example forms, with the liner 50 attached to the structural support frame 20, the play yard 10 can be configured in an expanded or unfolded configuration for use (see **Figure 1****),** or can be configured in a collapsed orfolded configuration for storage or transport (see **Figure 2****).** In examples, the frame 20 is constructed of substantially rigid tubing or bars formed of aluminum, steel, plastic or other structural material(s), and the liner 50 is constructed of polyester, cotton, or other natural or synthetic fabric or other flexible material(s). In examples, as recited above, the liner 50 can preferably be either removably attached to the frame 20 or permanently attached thereto. For example, as will be described below, according to some examples, the liner 50 is flexible and substantially stretchable and elastic such that the liner 50 can generally be configured so that the height of the floor or bottom portion of the liner 50 is adjustable between at least two different heights. The tubing or bars of the frame optionally comprise a round, oval, square, rectangular or other cross-sectional shape(s), and the liner attachments are compatible with frame members of different configurations. The liner 50 optionally includes one or more panels of mesh or other materials providing visibility and breathability through the liner. According to some example forms, the mesh or visibility material can be formed from a substantially elastic material. Optionally, one or more panels of the liner 50 can comprise one or more couplings or engagement members or mechanisms (e.g., zippers, clasps, clips, etc.) such that at least a portion of the panel(s) can be uncoupled to provide an opening or access therethrough (as will be described below).

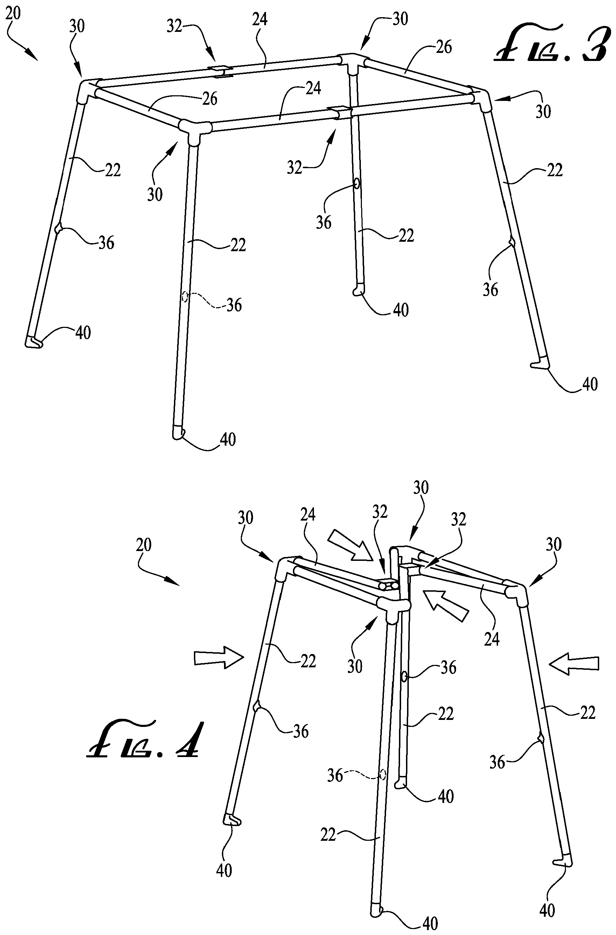

As depicted in **Figures 3-4****,** the frame 20 comprises four generally upright corner posts 22, first and second upper side cross-members 24, and first and second upper end cross-members 26, forming a generally rectangular three-dimensional housing bounding an internal contained volume or space S for structurally supporting the liner 50 to receive a child therein. In the depicted example, the side cross-members 24 are longerthan the end cross-members 26, defining a containment having a length greater than its width. In alternate examples, the length and width may be generally equal (e.g., forming a square or cubed three-dimensional housing), or the width can be greater than the length. In alternative examples, the three-dimensional housing can be shaped as desired, for example, wherein the three-dimensional housing cross-sectional shape (e.g., taken along a horizontal plane parallel with the support surface and generally coinciding with the cross-members 24, 26) can be generally oval, circular, triangular, or otherwise shaped as desired. Optionally, the assembly of the frame (e.g., corner posts 22, first and second upper side cross-members 24, and first and second upper end cross-members 26) an be shaped and connected as desired, for example, to form a desirable three-dimensional shape to provide for permanent or removable connection between the corner posts 22, the first and second upper side cross-members 24, and the first and second upper end cross-members 26. In some example forms, the corner posts 22 and/or the cross-members 24, 26 are at least partially curved or radiused, for example, to provide a desired three-dimensional housing.

In examples, the frame 20 is collapsible or foldable for more efficient storage and transport when not expanded and set up for use. For example, in the depicted examples, first and second ends of the side cross-members 24 are pivotally connected by hinged or pivotal end coupling joints 30 to upper ends of the corner posts 22. The ends of the cross-members 26 are generally fixedly engaged with the coupling joints 30, for example, so that they do not pivot relative to the coupling joints 30. Thus, according to example forms, the end coupling joints 30 are configured such that the first and second ends of the side cross-members 24 are pivotally coupled to the end coupling joints 30 and the first and second ends of end cross-members 26 are fixedly engaged with the end coupling joints 30. However, according to other example forms, the ends of the end cross-members 26 can be pivotally connected to the end coupling joints 30. The side cross-members 24 optionally also include hinged or pivotal medial coupling joints 32 about midway along their lengths. One or more of the coupling joints 30, 32 are optionally lockable to releasably retain the frame in the expanded and/or folded configurations, for example latching or locking when opened into the expanded configuration **(****Figure 3****),** and requiring manual actuation by an adult caregiverto release the frame for folding **(****Figure 4****)** and prevent inadvertent folding by a child contained in the play yard 10. Thus, in examples, the frame 20 is foldable between the expanded configuration **(****Figure 3****)** and the collapsed configuration **(****Figure 4****)** with the liner 50 installed or removed.

In the depicted example, the corner posts 22 generally extend at least partially outwardly, for example, from the coupling joints 30 to the ground surface (e.g., supporting the frame 20) to define a generally trapezoidal / pyramid frame. Optionally, the corner posts 22 are generally configured to extend substantially vertical (e.g., up and down). In one example form, the frame 20 can be configured to define a 2-dimensional generally trapezoidal shape when viewed from the sides or ends, for example, wherein the corner posts 22 generally extend at least partially outwardly in two dimensions. Optionally, in other example forms, the frame 20 can be configured to define a 3-dimensional pyramid-like (e.g., pyramidal-frustum) shape, for example, where the corner posts 22 generally extend outwardly from the coupling joints in three dimensions.

One or more of the corner posts 22 optionally includes a liner attachment loop 36 for receiving a strap or other attachment portion of the liner 50, for example at or adjacent the upper or medial portion of the post. The corner posts optionally further comprise base supports or feet 40 at lower ends thereof, which can optionally include wheels or casters for rolling support and repositioning of the play yard. In some example forms, one or more of the feet 40 generally comprise a rubberized or other high friction engagement portion, for example, so that the feet 40 (and thus the corner posts 22 and frame 20 thereof) remain generally engaged and grounded with a support surface, for example, a floor or other surface that the frame 20 is resting on. According to some example forms, the feet 40 preferably additionally provide for attachment with at least a portion of the liner 50, for example, to provide for fitting engagement of the liner 50 with the frame 20 (as will be described below).

In alternate examples, the frame 20 can comprise an accessory mount, for example at or adjacent an upper end of the corner posts, for supporting a sleeper, bassinet, changing table, container or other accessories. Furthermore, the frame 20 can optionally include one or more lower diagonal cross-members pivotally or hingedly connected at one end to the feet 40 or lower ends of the corner posts 22, and at the other end to a central base coupling hub, and wherein lateral side cross-members can optionally extend between adjacent lower diagonal cross-members, and may include support feet with pivotal or hinged couplings at or adjacent their midpoints, and pivotal and/or sliding couplings at ends thereof. U.S. Patent App. Serial No. 15/047,912 is owned by the applicant, and shows an example collapsible frame for a child containment device. Optionally, in alternate examples, the frame can generally be a substantially rigid frame that is not foldable or collapsible.

According to some example forms, the frame 20 can optionally adjust up and down, for example, to increase or decrease the height of the upper side and end cross-members 24, 26. For example in some example forms, the corner posts 22 can be configured to provide for the adjustment in their length thereof, for example, by providing telescoping corner posts. In example forms, the telescoping corner posts can comprise one or more locking or adjustment members or clips such that an operator can easily adjust the length of the corner posts. Furthermore, according to some example forms, the upper side and end cross-members 24, 26 can be telescoping to provide adjustability to their respective lengths thereof.

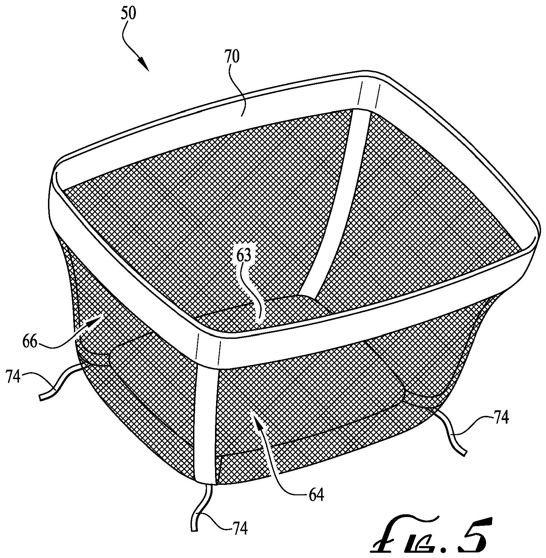

**Figure** 5 shows the liner 50 in greater detail and removed from the frame 20. As depicted, the liner 50 is in a relaxed, unstretched state, and comprises a generally rectangular base or floor panel 63 and a sidewall enclosure. In examples, the sidewall enclosure comprises first and second generally rectangular side wall panels 64, and first and second generally rectangular end wall panels 66. In example forms, an upper portion of the rectangular side wall panels 64 and the rectangular end wall panels 66 of the liner 50 can comprise a flap portion 70, which is positioned at the open end of the rectangular side wall panels 64 and the rectangular end wall panels 66, and which extends substantially around the entire upper periphery of the liner 50, for example, which can be folded outwardly around at least a portion of the side and end cross-members 24, 26 (and the end coupling joints 30 coupled therebetween). Thus, in examples, the flap portion 70 is integral with the sidewall enclosure and is a portion of the side and end wall panels 64, 66. According to examples, the flap portion 70 can be formed from a plurality of flap portions, for example, wherein each of the upper portions of the side and end wall panels 64, 66 comprise a flap portion, and wherein connection of the side and end wall panels 64, 66 (forming the sidewall enclosure) connects each of the flap portions together to define the flap portion 70. Optionally, a stiffening member or additional fabric portion can be provided with the flap portion 70, for example, to provide additional stiffness and rigidity of the flap portion 70. Optionally, the flap portion 70 (or multiple flap portions) can be removably mounted to an upper portion of the side and end wall panels 64, 66. In some example forms, one or more fasteners are provided for removable engagement of the flap portion 70 with one or more portions of the frame 20 and/or the liner 50. Optionally, the flap portion 70 comprises one or more inserts or coupling members or clips mounted thereto (or to a portion of the liner 50) for providing for coupling engagement with the frame 20 (or cross-members 24, 26).

In some example forms, one or more straps, loops, or other fastening members 74 extend from a portion of the liner 50, for example, generally at or near the base 63 (or side or end wall panels 64, 66) for coupling to the corner posts 22 of the frame 20, or for example, for coupling to the liner attachments (e.g., loops 36 and/or the feet 40) of the corner posts 22. In some example forms, the liner attachments can be provided by one or more clasps, clips or other connectors or couplings for connecting to and disconnecting from the fastening member 74 to provide for quick and secure coupling engagement with the frame 20 (or to one or more portions thereof) in the various configurations as described herein.

In examples, the liner 50 is stretchable and elastic to provide for the convertibility between the two or more configurations (e.g., the play yard configuration 10 of **Figures 1** and **6**, the bassinet configuration 10' of **Figure 7** and the sleeper configuration 10" of **Figure 8****).** According to some example forms, the liner 50 is formed from a single piece of fabric, which is substantially stretchable and elastic, for example to accommodate a substantially large change in its size or dimensions to provide for convertibility between the configurations. Optionally, two or more single pieces of fabric are assembled together to form the liner 50. In examples, about two or more pieces of inelastic, non-stretchable fabrics can be used to form the liner. Optionally, one or more pieces of inelastic fabric can be combined with one or more pieces of elastic fabric, for example, such that the liner is formed from a combination of both inelastic (not stretchable) and elastic (stretchable) fabrics. Further optional, one or more pieces of inelastic fabric can be combined with one or more pieces of semi-elastic fabric, or for example, the liner can be formed with one or more desired fabrics or other generally flexible sheet materials, or other woven materials, and wherein the elasticity and elastic deformation (e.g., stretchability) of the material(s) can be chosen as desired. In examples, one or more pieces of fabric can be generally sewn, heat bonded or welded, glued, or otherwise attached together as desired. As shown in **Figure 5****,** the liner 50 is in its natural, unstretched state, which is substantially smallerthan the liner 50 when it is coupled to the frame 20 and configured as a play yard 10. According to one example form, the liner 50 comprises one or more stretch fabrics, which can preferably provide for a 2-way and/or 4-way stretch, for example, so that the liner 50 is capable of being converted between the configurations to provide adjustment to the depth/height of the floor 63. Optionally, in other example forms, the fabric of the liner 20 can preferably be formed from other stretchable or elastic materials, or can be formed from a combination of materials (both stretchable and elastic and/or generally semi-elastic).

In examples, the fabric is substantially resilient such that the liner 50 does not remain stretched after normal use, but instead generally retains its elasticity, for example such that the dimensions of the liner 50 in its relaxed, unstretched state are between about 15% to about 65% percent smaller than the dimensions of the liner 50 in its expanded configuration with the base positioned at a first floor position (see **Figures 1** and **6****).** According to some example forms, the dimensions of the liner 50 in its relaxed, unstretched state are between about 20% - 45%, more preferably about 35%, smaller than the dimensions of the liner 50 in its expanded configuration with the base 63 positioned at a first floor position (e.g., generally the maximum expansion of the liner 50). Thus, according to examples, the liner 50 in its relaxed, unstretched state can be stretched (generally outwardly and by and outward, external force) such that the dimensions of the liner in the expanded configuration are generally between about 15% - 65% larger than the dimensions of the liner 50 in the relaxed, unstretched state as depicted in **Figure 5****.** Preferably, the liner 50 comprises a sufficient amount of elasticity such that the liner 50 can be stretched and adjustable relative to the frame 20, for example, which can generally be trapezoidal or pyramid-shaped. Optionally, in other examples, the liner 50 can be preferably shaped as desired, for example, generally comprising a circular, oval, elliptical or other cross-sectional shape, for example, and wherein the floor panel is generally shaped to match the cross-sectional shape. Optionally, a generally single side panel extends around the entire periphery and is generally coupled to the floor panel 63. Preferably, the floor panel 63 can be shaped as desired. In alternate examples, the liner 50 can be configured to expand / retract similar to an accordion, for example, wherein a plurality of resilient folds facilitate in the expansion / retraction of the liner between the configurations.

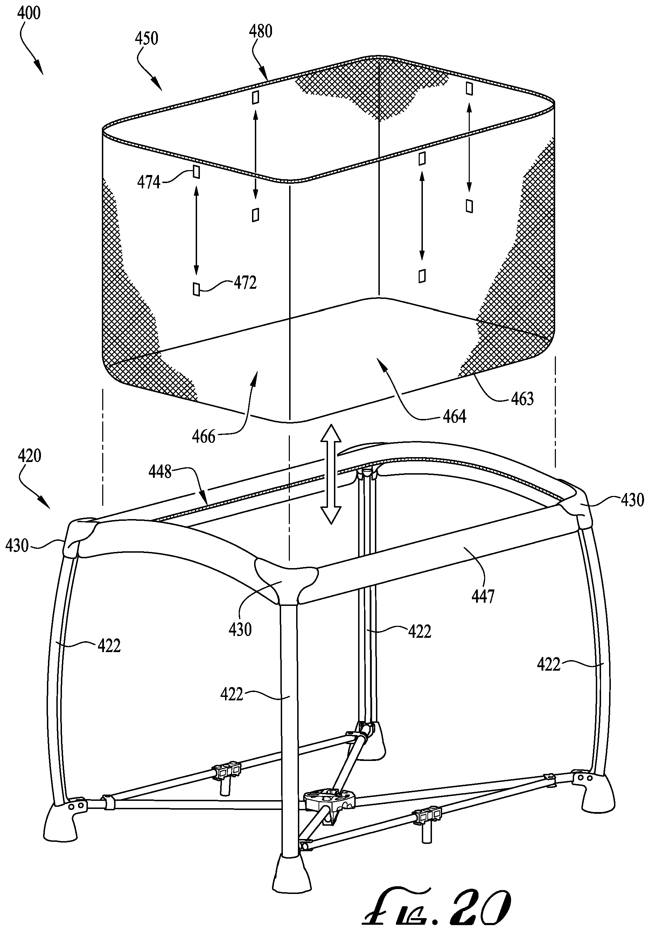

**Figures 6-8** show the child containment device in the play yard 10 configuration (see **Figures 1** and **6****),** the bassinet 10' configuration (see **Figure 7****),** and the sleeper 10" configuration (see **Figure 8****).** In examples, the child containment device (e.g., the structural support frame 20 and the liner 50) is convertible between the play yard 10, the bassinet 10', and the sleeper 10" configurations, for example, wherein the liner 50 is substantially stretchable and elastic (e.g., tensionable) such that when the liner 50 is coupled to the frame 20, the floor panel 63 of the liner 50 (or mattress portion 62 therein) can be positioned between a first floor position (play yard 10), a second floor position (bassinet 10'), and a third floor position (sleeper 10"). For example, as shown in **Figure 6****,** in the play yard configuration 10, a depth D₁ is defined between the upper perimeter of the child containment device (or flap 70) and the floor panel 63 (or mattress portion 62 therein), for example, which is generally between about 20 - 35 inches, more preferably between about 21 - 30 inches, for example between about 21 - 26 inches according to one example. According to example forms, when the child containment device is in the play yard configuration 10 with the liner 50 positioned in the first floor position, the base 63 of the liner 50 is generally in contact with the support surface or ground surface that is supporting the support frame 20. Optionally, according to other examples, the frame 20 can comprise lower supports (see **Figure 20****)** on which the base 63 of the liner 50 can rest (e.g., causing the base 63 to become offset from the ground surface), or the liner 50 can generally be suspended and offset from the ground surface, for example, as shown in **Figures 7** and **8****.**

As shown in **Figure 7****,** in the bassinet configuration 10', a depth D₂ is defined between the upper perimeter of the child containment device and the floor panel 63 (or mattress portion 62 therein), for example, which is generally between about 6 - 16 inches, more preferably between about 7 - 14 inches, for example between about 7.5 - 12 inches according to one example. As shown in **Figure 8****,** in the sleeper configuration 10", a depth D₃ is defined between the upper perimeter of the child containment device and the floor panel 63 (or mattress portion 62 therein), for example, which is generally between about 6 - 16 inches, more preferably between about 7 - 14 inches, for example between about 7.5 - 12 inches according to one example. Thus, in some examples, the depth D₃ can be substantially similar to the depth D₂. Alternatively, the depth D₃ can be chosen as desired, for example, which can be generally less than the depth D₂. According to examples, the internal containment volumes S of the play yard 10, bassinet 10', and sleeper 10" are generally different, for example, wherein the internal containment volume S of the play yard 10 is larger than the internal containment volumes S of the bassinet 10' and sleeper 10", wherein the internal containment volume S of the bassinet 10' is smaller than the internal containment volume S of the play yard 10 but generally larger than the internal containment volume S of the sleeper 10", and wherein the internal containment volume of the sleeper 10" is generally smaller than the internal containment volumes S of the play yard 10 and the bassinet 10'. Reference herein to the internal containment volume S is understood to mean the containment volume defined by the liner 50 in the respective configurations.

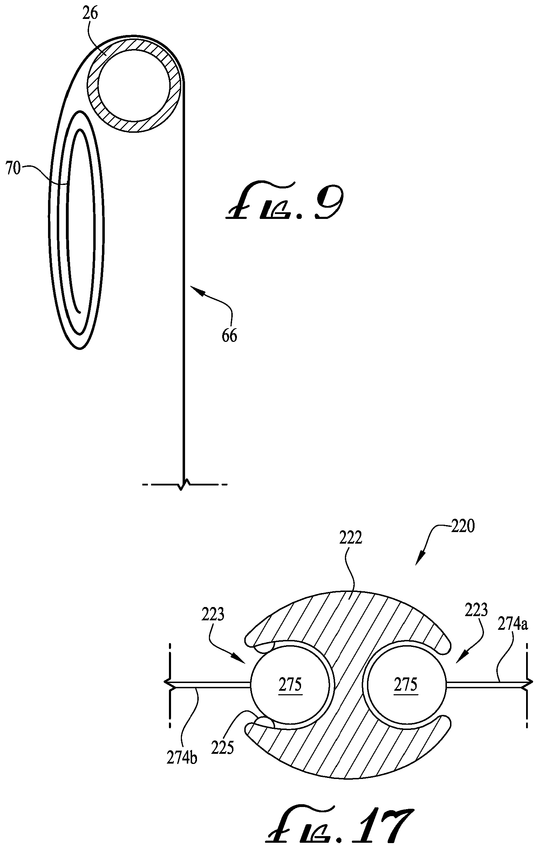

As depicted in **Figures 6-8****,** to convert the child containment device from the play yard configuration 10 to one of the bassinet or sleeper configurations 10', 10", the upper flap portion 70 is folded or rolled towards the panels 64, 66 such that at least a portion of the panels 64, 66 is generally folded and rolled up with the upper flap portion 70, and thus causing the floor panel 63 to generally raise from the ground surface to either of the second or third floor positions. For example, as depicted in **Figures 7-8****,** at least a portion of the panels 64, 66 is generally rolled or folded with the upper flap portion 70 to cause adjustment to the height of the floor panel 63 (also see **Figure 9****).** According to some example forms, one or more fasteners can be provided for removably coupling the upper flap portion 70 to the frame 20 (or to a portion of the liner 50), or for example, for securing the rolled flap (e.g., comprising at least a portion of the panels rolled therewith) to the frame 20 or to a portion of the liner 50).

According to preferred example forms, the elasticity of the liner 50 additionally causes retraction of the liner 50, and thus a reduction to the internal containment volume S thereof, for example, which preferably assists in adjustment in the height of the floor panel 63. Optionally, in other examples, the upper flap portion 70 remains generally folded at least partially around the upper side and end cross-members 24, 26, and the elasticity of the liner 50 generally solely causes adjustment to the internal containment volume S and the height of the floor panel 63 relative to the ground surface. As shown, in some example forms, one or more fastening members 74 can be provided with the liner 50 for quick and secure coupling engagement and disengagement with the liner attachments of the frame 20 (or to one or more portions thereof), for example, to generally position the floor panel 63 at a desirable height.

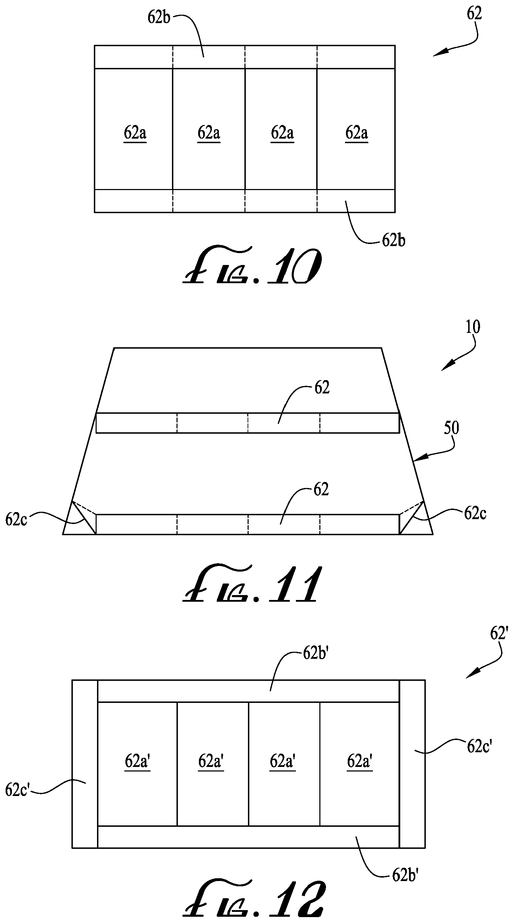

In example forms as described above, a floor platform or mattress 62 is optionally provided for placement on the floor panel 63 of the liner 50 within the contained space S bounded by the side walls 64 and end walls 66. In example forms, the mattress 62 generally comprises a plurality of foldable segments having internal cushioning and support, which preferably is generally foldable to accommodate convertibility between the configurations (e.g., play yard, bassinet and sleeper) and to facilitate storage or travel. For example, according to some examples and as described above, at least some of the dimensions of the liner 50 are generally reduced or enlarged between configurations. As depicted in **Figure 10****,** the mattress panel 62 generally comprises a plurality of foldable panels or segments, for example, generally central rectangular segments 62a, and side rectangular segments 62b. In example forms, the segments 62a, 62b are generally configured to fold relative to each other, for example, to increase or reduce the surface area thereof such that the mattress 62 can be adapted to the size of the floor panel 63 based on the configuration of the child containment device. In example forms, the entire available surface area (e.g., no segments folded) of the mattress 62 is used in the play yard configuration 10. In the bassinet configuration 10', the side rectangular segments 62b are generally folded to lie underneath the central rectangular segments 62a, for example, as the dimensions of the base 63 of the liner 50 are generally at least partially smaller or reduced such that at least some of the surface area of the mattress 62 is generally removed.

As depicted in **Figure 11****,** one or more gussets, wedges or flaps 62c can be incorporated with the liner 50, for example, to generally extend from one or more of the panels' 64, 66 edges of the liner 50 to the mattress 62 (or edges thereof). In some example forms, the flaps 62c can comprise internal cushioning and support as similarly described with respect to the mattress 62. In some example forms, the flaps 62c generally extend from the one or more panels of the liner 50 such that they generally engage or contact a bottom outer edge of the mattress 62. Optionally, the flaps can extend from the panels of the liner 50 such that they generally engage a top corner portion of the mattress 62, or for example, generally extending at least partially on a top surface of the mattress 62 (see dashed lines). Optionally, the flaps 62c can be configured as desired, for example, for connection with the mattress 62, or for engagement with the mattress 62 such that a generally smooth transition is provided therebetween.

In some example forms, the flaps 62c can be removable from the liner 50, or for example, the flaps 62c can be formed from different lengths, for example, such that a first flap comprising a first dimension is generally removably engaged with the liner 50 in the play yard configuration 10, but wherein a second flap comprising at least partially smaller dimension would be removably engaged with the liner 50 in the bassinet configuration 10'. Optionally, a third flap (comprising a generally smaller dimension than the second flap) could be provided for removable engagement with the liner 50 in the sleeper configuration 10". In other examples, a flap 62c is generally provided for the bassinet and sleeper configurations 10', 10", but typically flaps are not needed for the play yard configuration 10, for example, wherein the dimensions of the mattress 62 are generally configured for engagement with the floor panel 63 and the bottom of the panels 64, 44 of the liner 50 near the floor surface 63. Thus, when the liner 50 is in a substantially stretched and expanded configuration (see **Figure 1****),** the mattress 62 is generally provided with a snug fit atop the floor 63 and the bottom portions of the panels 64, 66. However, according to other examples, for example as depicted in **Figure 11****,** the liner 50 comprises one or more flaps 62c for abutment or engagement, or for example, generally in close proximity to the outer edges of the mattress 62 or a corner portion or top surface of the mattress 62. Thus, in some example forms, as depicted in **Figure 11****,** with the flap 62c removably engaged with the liner 50 (e.g., an internal surface of the liner bounding the internal containment volume S) at least one dimension of the mattress 62 remains the same between the play yard and bassinet configurations 10, 10'.

In alternate examples, as depicted in **Figure 12****,** a mattress 62' comprises a plurality of foldable panels or segments, for example, generally central rectangular segments 62a', side rectangular segments 62b' and end rectangular segments 62c'. In example forms, the segments 62a', 62b', and 62c' are generally configured to fold relative to each other, for example, to increase or reduce the surface area thereof such that the mattress 62' can be adapted to the size of the floor panel 63 based on the configuration of the child containment device (e.g., play yard, bassinet or sleeper). According to some example forms, one or more mattress panels are generally folded relative to each other such that the surface area of the mattress 62 is generally reduced, for example to engage the floor panel 63 in the bassinet configuration 10' or the sleeper configuration 10". In some example forms, the mattress 62 can generally be rotated 90 degrees before installation within the liner 50 and in contact with the floor surface 63, for example, for reconfiguring the mattress 62 from being used in the play yard configuration 10 (maximum surface area) to a configuration (e.g., bassinet or sleeper) where the floor surface 63 is generally not expanded or stretched as much, for example, which reduces the dimensions thereof. In some example forms, the mattress can be configured, for example, as described in U.S. Patent App. Serial No. 14/021,934, which is owned by the applicant and shows a plurality of different mattress configurations.

According to some example forms, some of the mattress panels (or at least portions of the panels) can be formed from a resiliently flexible material, or a combination of resilient and flexible materials, for example, such that a portion thereof can be substantially folded relative to another portion of the same panel. For example, as depicted in **Figure** 12, the side and end rectangular segments 62b', 62c' can be configured to substantially fold, for example, when it is desirable to fold one or more of the segments 62a' relative to each other, or for example, by folding the side rectangular segments 62b' relative to the central rectangular segments 62a' (see dash lines indicating where the segments 62b', 62c' can be folded as desired. Optionally, a hinge or other pivotal member or coupling can be provided for allowing pivoting or folding of a portion of a segments relative to another, for example, which is generally how the segments 62a', 62b' and 62c' are generally foldably coupled together.

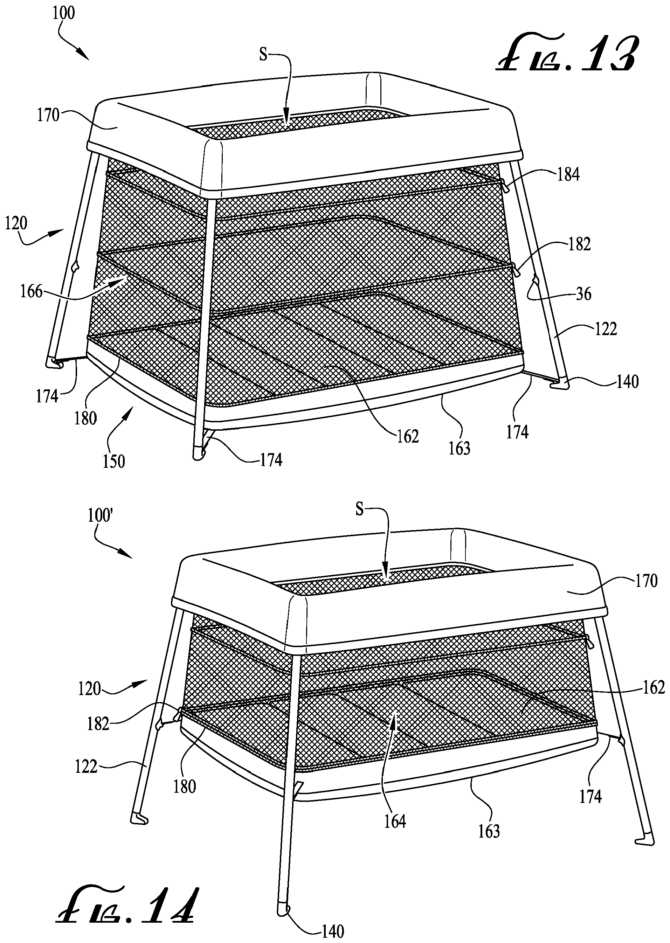

**Figures 13-14** show a child containment device according to another example. As depicted, the child containment device comprises a structural support frame 120 and an enclosure or liner 150. As similarly described above, the liner 150 is removably mounted to the structural support frame 20 and convertible between two or more floor positions, for example, such that the child containment device is convertible between a play yard configuration 100, a bassinet configuration 100', and a sleeper configuration (not shown).

As similarly described above, the liner 150 generally includes side panels 164, end panels 166, and a floor panel 163. In example forms, an upper portion of the side and end panels 164, 166 of the liner 150 can comprise a flap portion 170, which is positioned at the open end of the rectangular side wall panels 164 and the rectangular end wall panels 166. In examples, the flap portion 170 is at least partially folded around a portion of the support frame 120. In example forms, instead of generally folding the flap portion 170 on itself as described above, a pair of zippered teeth 180, 182 and 184 are provided and generally extend horizontally around the periphery of the liner 50 (e.g., generally extending along each panel 164, 166 at the same height), to provide for interengagement therebetween, for example, to adjust the height of the mattress 162 (or the floor panel 163) relative to the support or ground surface. Preferably, the floor panel 163 is generally contacting or engaging the ground surface when the child containment device is in the play yard configuration 100.

As shown in **Figure 14****,** the child containment device is in the bassinet configuration 100' and the horizontal extension of zippered teeth 180 are generally interengaged with the zippered teeth 182, for example, which are generally positioned at a height that is greater than the bottom of the panels 164, 166, but is generally shorter than a top portion of the panels 164, 166. In example forms, the zippered teeth 184 are similarly interengageable with the zippered teeth 180, for example to convert the child containment device to a sleeper configuration. Optionally, one or more fastening members 174 and be provided for securing at least portions of the liner 150 to the support frame 120. In some example forms, the liner 150 is formed from a substantially stretchable and resilient fabric as described above. In alternate examples, the liner 150 is formed from a plurality of substantially inelastic, non-stretchable fabrics. Optionally, at least a portion of the liner can be formed from a substantially stretchable and resilient fabric material, and wherein one or more other portions of the liner 150 can be formed from substantially inelastic, non-stretchable materials, or for example, semi-stretchable materials or fabrics. In some example forms, it is desirable to provide shape to one or more portions of the internal containment volume S between the different configurations, and thus, some portions of the liner 150 can be provided with the substantially stretchable fabric or other stretchable materials to comprise a desirable deformation (or retraction due to being stretchable) of the liner 50 in either of the bassinet 100' or sleeper configuration.

Optionally, according to some examples, the zippered teeth 180, 182 and 184 can be in the form of other interengagement members or couplings, for example, one or more clips, hook and loop (e.g., VELCRO) material, buckles, snaps, ties, hooks, or other releasably engageable members.

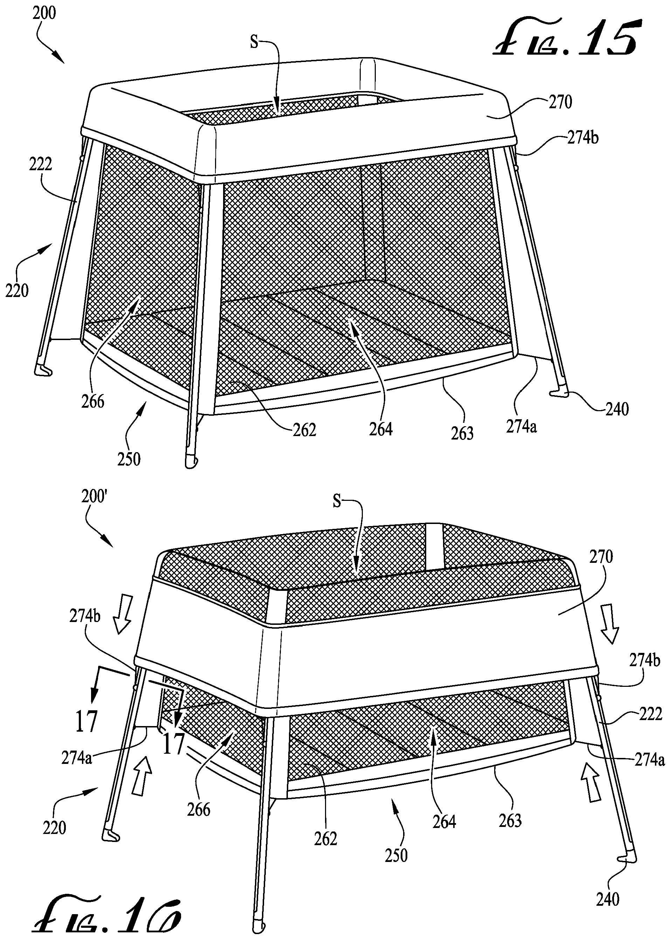

**Figures 15-17** show a child containment device according to another example. As depicted, the child containment device can be convertible between a play yard configuration 200, a bassinet configuration 200', and a sleeper configuration (not shown). Preferably, the child containment device is configured such that the height of the mattress 162 can be secured at a plurality of different heights. As depicted, each of the corner posts 222 define two generally spaced-apart channels 223 extending along the length thereof. In examples, a shuttle or slide-rod 275 is generally movably mounted within an outer channel of the channels 223 and connected to the flap portion 270 of the liner 250 by a strap, tether or other connector 174b. Similarly, a shuttle or slide-rod 275 is movably mounted within the inner channel of the channels 223 and connected to the floor panel 263 (or a portion of the panels 264, 266). Thus, with the liner 250 engaged with the shuttles 275, and the shuttles 275 engaged with portions of the liner 250, the height of the mattress 262 (or floor panel 263 supporting the mattress 262) can be adjustable between a plurality of different heights. In the play yard configuration 200, the floor panel 263 is at a first floor height and generally in contact with the ground surface. In the bassinet configuration 200', the mattress 262 is generally positioned at a second floor position that is at least partially offset upwardly from the first floor position. And, in the sleeper configuration, the mattress 262 is at a third floor position that is at least partially offset upwardly from the second floor position. Optionally, the height of the mattress 262 can generally be configured as desired, for example, at a height that is generally between the ground surface and an uppermost portion of the corner posts 222. In some example forms, as depicted in **Figure 17****,** one or more interengagement members 225 can be provided within one or more portions of the channels 223, or can be formed along at least a portion of the extension of the channels 223 such that the shuttles 275 can be frictionally engaged with the channel 223, and thus allow for substantial securement of the mattress 262 at a particular position. Thus, in some example forms, at least portions of the length of the channels 223 can comprise interengagement members 225, which can extend a desirable length, to provide for generally substantially securing the liner 250 (and floor panel 263) at a particular height. In alternative examples, the liner 250 can be secured and positioned between the configurations by use of other fasteners, for example, with clips, hooks, snaps, etc. In some example forms, a plurality of interengagement members or fasteners are provided along the length of both the outer and inner portions (or sides) of the corner posts 222, and wherein portions of the liner 250 comprise interengagement features or fasteners for providing removable coupling engagement with the fasteners of the corner posts 222, for example such that the floor panel 263 can be positioned at a plurality of floor heights.

In examples, as described above, the liner 250 can be substantially stretchable and elastic, substantially inelastic and non-stretchable, or can be a combination of both comprising stretchable, elastic portions and inelastic, non-stretchable portions. For example, according to some examples, when the corner posts 222 extend outwardly (e.g., forming a trapezoidal / pyramid frame), the liner 250 is configured to be at least partially elastic and stretchable, for example, to conform to the shape of the frame 220 in the several configurations. Alternatively, in some examples, when the corner posts 222 are configured for extending substantially vertical (e.g., up and down), the liner 250 can be inelastic and non-stretchable.

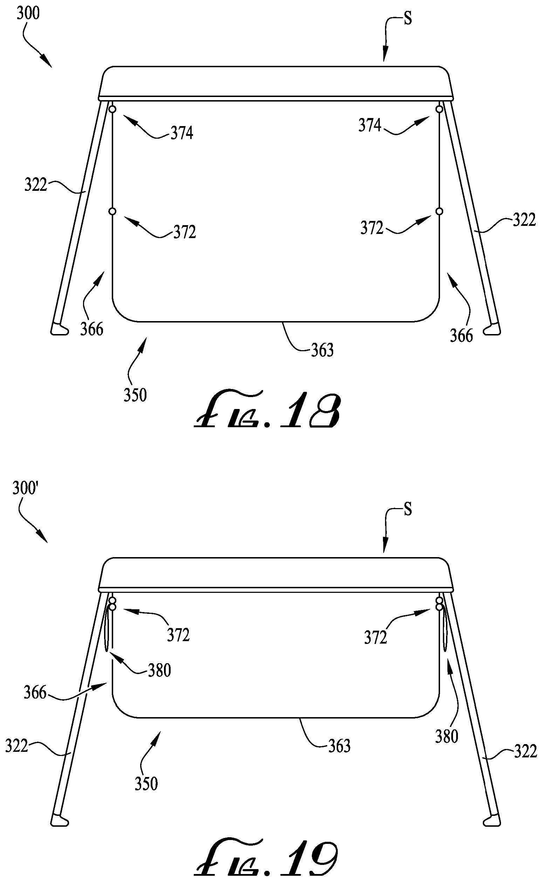

**Figures 18-19** show a show a child containment device according to another example. As depicted, the child containment device can be convertible between a play yard configuration 300, a bassinet configuration 300', and a sleeper configuration (not shown). Preferably, the child containment device is configured such that the height of the mattress 362 (or floor panel 363) can be secured at a plurality of different heights. As depicted, the sidewall enclosure (or panel(s) thereof - depicted as end wall panels 366) comprises a plurality of interengagement members or fasteners 372, 374 for providing removable coupling engagement therebetween, for example, to adjust the height of the floor panel 363 relative to the support surface. As depicted in **Figure 18****,** the end wall panels 366 of the liner 350 comprise first fasteners 372 generally mounted to an intermediate or middle portion of the panel 366 (e.g., between the floor panel 363 and upper portion), and comprise second fasteners 347 generally mounted to an upper portion of the end wall panels 366. Thus, as shown in **Figure 19****,** the first and second fasteners 372, 374 are coupled together to provide for adjustment to the height of the floor panel 363, for example, to convert the child containment device from a play yard configuration 300 to a bassinet configuration 300'. In examples, convertibility between the configurations is provided by an accordion-like fold 380 of the liner (the excess fabric is generally resting and hanging on an outer or exterior portion of the liner 350), for example, whereby the first and second fasteners are coupled together to provide adjustment to the height of the floor panel. Preferably, additional fasteners can be provided such that the floor panel 363 can be adjustable between a plurality of heights. Optionally, one or more of the fasteners can be mounted to portions of the frame or corner posts 322, and the accordion-like flap 380 can be configured for hanging interiorly, for example, within the area defining the interior containment volume S. In examples, the liner 350 is substantially inelastic and non-stretchable. Optionally, the liner 350 can be substantially elastic and stretchable, or can be at least partially stretchable as desired.

**Figure 20** shows a child containment device according to another example. As depicted, the child containment device can be convertible between a play yard configuration 400, a bassinet configuration (not shown), and a sleeper configuration (not shown). Preferably, the child containment device is configured such that the height of the mattress 362 (or floor panel 363) can be secured at a plurality of different heights. As depicted, the sidewall enclosure (or panel(s) thereof - depicted as side and end wall panels 464, 466) comprises a plurality of interengagement members orfasteners 472, 474 for providing removable coupling engagement therebetween, for example, to adjust the height of the floor panel 363 relative to the support surface (as described in **Figures 18-19****).** In examples, the structural support frame 420 comprises a sleeve 447 for coupling to the upper side and end cross-members. Preferably, the sleeve 447 comprises a fastener 448 for providing coupling engagement with a fastener 480 of the liner 450, for example, to connect the liner 450 to the structural support frame 420. In examples, the fasteners 448, 480 are generally in the form of zippered teeth, which are interengageable with each other and generally extend around the entire perimeter of the respective sleeve 447 and sidewall enclosure of the liner 450. In examples, the sleeve 447 can be formed to extend around the entire upper perimeter of the support frame, or for example, can comprise individual sleeves for connecting to each of the upper cross-members. The sleeve 447 can be permanently mounted to the cross-members, or the sleeve can be removably attached thereto to provide for removal therefrom. Similarly, the fasteners 447, 480 can be configured for permanent or removable engagement therebetween. In alternate examples, the fasteners for securing the liner 450 to the frame (e.g., fasteners 447, 480) and the fasteners of the liner 450 for providing adjustment to the height of the floor panel 463 (e.g., 472, 474) can be in other forms, for example, other mating fasteners including clips, hooks, snaps, or other interengagement members as desired. In examples, the liner 450 is substantially inelastic and non-stretchable. Optionally, the liner 450 can be substantially elastic and stretchable, or can be at least partially stretchable as desired.

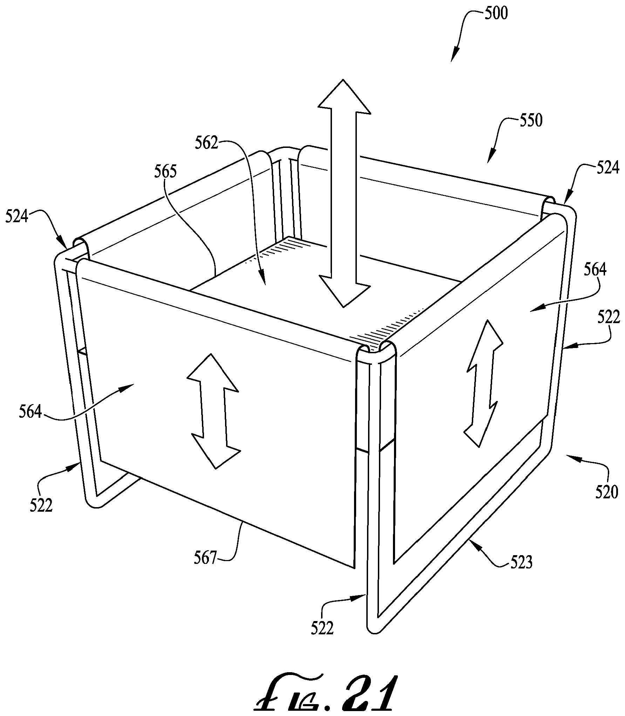

**Figures 21-24** show a child-containment device 500 according to an example embodiment. The child-containment device 500 can have the same or substantially the same basic design and construction as any of the previously described examples. As such, the child-containment device 500 includes a structural support frame 520 and an elevator height adjusting (aka depth-adjustable) enclosure 550 supported by the frame 520.

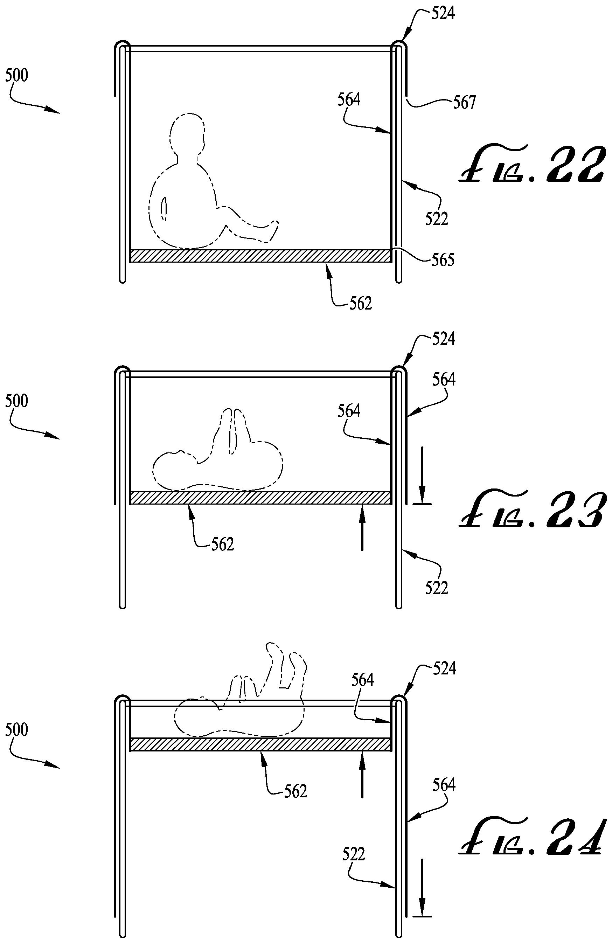

The enclosure 550 includes a support surface (e.g., a floor) 562 and flexible walls 564 that that are connected to the support surface 562 to together define an internal containment volume. The flexible walls 564 are vertically slidable relative to the support frame 520 to reposition/adjust the support surface 562 to a plurality of different height/depth positions. In the depicted embodiment, for example, the child-containment device 500 can be adjustable and convertible (see **Figure 21****)** between a play yard configuration with the support surface 562 in a first/lower position **(****Figure 22****),** a sleeper configuration with the support surface 562 in a second/intermediate position **(****Figure 23****),** and a diaper-changing station configuration with the support surface 562 in a third/upper position **(****Figure 24****).** The child-containment device 500 can include inter-engaging elements (e.g., seating, indexing, or catch members) configured so that the different positions of the support surface 562 are discrete and pre-defined, or the child containment device 500 can be free of any such inter-engaging elements so that the support surface 562 can be positioned anywhere within the range between the lower and upper positions as selected by the user.

The structural support frame 520 includes upper peripheral frame members 524 and upright frame members 522 supporting the upper peripheral frame members 524. The upper peripheral frame members 524 define the periphery of the enclosure 550, for example, the depicted embodiment includes four upper frame members 524 arranged in a rectangular shape. The upright frame members 522 can be substantially vertical and corner-positioned, as depicted, or they can have another configuration such as X-members. In some embodiments such as that depicted, lower frame members 523 extend between the upright frame members 522. These frame members 522, 523, and 524 can be of a conventional type for example plastic or metal tubing.

The support surface 562 of the height/depth adjusting enclosure 550 can include a mattress (including a bed pad, matt, or cushion), as depicted, with the mattress sufficiently firm and rigid to by itself support the child without sagging, or with a substantially rigid platform provided for supporting the mattress and child. In some embodiments, the support surface includes a semi-rigid floor, a flexible webbing or netting, a substantially rigid platform without a mattress, or another element that can support an infant and/or other object(s). And the flexible walls 564 can be provided by a fabric (as depicted), a mesh, or other flexible sheet-like material. In typical embodiments, the flexible walls 564 are substantially inelastic and non-stretchable. In other embodiments, the flexible walls are substantially stretchable and elastic, or include a combination of stretchable, elastic portions and inelastic, non-stretchable portions.

The flexible walls 564 have first end portions 565 that are connected to the support surface 562 at its peripheral edges, for example by conventional stitching, fasteners, or the like. The flexible walls 564 have a vertical length (from their first end portions 565 to their opposite second end portions 567) that is greater than the height of the upper frame members 524 (relative to a floor, table, or other surface supporting the child-containment device 500). This extra length is used to route the flexible walls 564 over, and suspend them from, the upper frame members 524 in an overlapping, double-walled arrangement, with the first end portions 565 of the flexible walls 564 positioned laterally inward (toward the interior of the enclosure 550) relative to the second end portions 567 of the flexible walls 564, and with each of the flexible walls 564 forming an inner wall portion and an outer wall portion. Further, the flexible walls 564 are vertically slideable about the corresponding upper frame members 524, with the upper frame members 524 acting as pulleys that enable the flexible walls 564 to freely travel over/around them. In some embodiments, the upper frame members 524 include rollers (e.g., coaxially and rotationally mounted onto the frame member or between sections of frame members) that facilitate this smooth travel of the flexible walls 564 about the upper frame members 524 (e.g., the coaxial rollers can rotate relative to the upper frame members as the corresponding/contacted flexible wall 564 is moved between positions without direct sliding contact with the top frame members). In alternate embodiments, the upper frame members 524 rotate with respect to the upright frame members 522 to facilitate the smooth travel of the flexible walls 564.

In this way, the support surface 562 can be raised or lowered (as depicted by the larger double-headed motion-indicating arrow in **Figure 21****)** by repositioning (with respect to each other) the inner and outer wall portions of the overlapping peripheral wall 564 (as depicted by the smaller double-headed motion-indicating arrows in **Figure 21****).** So pulling down on (or otherwise moving downward) the second end portion 567 causes the first end portion 565 and the connected support surface 562 to raise, and conversely raising the second end portion 567 (or allowing it to be raised under the weight of the child and/or other load acting downward on the support surface 562) causes the first end portion 565 and the connected support surface 562 to lower, as depicted in **Figure 21****.** In a typical commercial embodiment, for example, with the support surface 562 in a first/lower position defining a play yard configuration **(****Figure 22****),** pulling down on the second end portion 567 of the flexible wall 564 (as indicated by the directional arrow in **Figure 23****)** causes the first end portion 565 and the connected support surface 562 to raise to a sleeper/bassinet configuration with the support surface 562 in a second/intermediate position **(****Figure 23****).** And pulling down further on the second end portion 567 of the flexible wall 564 (as indicated by the directional arrow in **Figure 24****)** causes the first end portion 565 and the connected support surface 562 to raise to a diaper-changing station configuration with the support surface 562 in a third/upper position **(****Figure 24****).** The child-containment device 500 can thereby be reconfigured to the various support-surface positions as desired by applying a downward force to the outer wall portion to raise the support surface or by releasing the outer wall portion (allowing it to be raised under the weight of the child and/or other load acting downward on the support surface 562) to lower the support surface.

It will be understood that, as used herein, the inner and outer portions of the overlapping walls 564 are defined by the current configuration, with the first end 565 always on the inside of the internal containment volume of the enclosure 550, but with other locations dependent on the configuration, because each configuration has a different length/portion of the wall on either side of the top frame member. For example, a longitudinal midpoint of one of the overlapping flexible walls 564 is on the inner wall portion in the configuration of **Figure 22****,** but it is on the outer wall portion in the configuration of **Figure 24****.** And with the support surface 562 in the third position above the first position, the inner wall portion above the support surface has a smaller height than in the first position.

In addition, the elevator height adjusting (aka depth-adjustable) enclosure 550 typically includes a locking mechanism to secure the support surface 562 in its selected height position. In typical embodiments, the locking mechanism includes inter-engaging fastening elements that mechanically engage each otherto secure the flexible walls 564 in place and prevent them from moving between their various configuration positions and that can be released from such mechanically secured engagement to allow them to move between their various configuration positions. In example embodiments, the inter-engaging fastening elements may be on the frame 520, on another/overlapping portion of the wall 564, or on both the frame and another/overlapping portion of the wall.

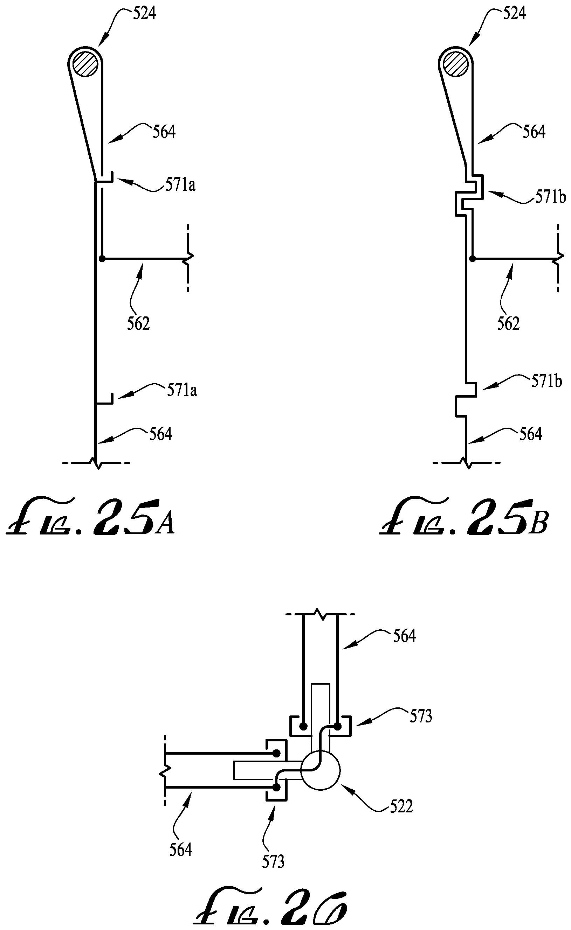

For example, the locking mechanism can be provided by a ratchet mechanism that includes inter-engaging fasteners in the form of a gear (round or linear) and a pawl that displaces from engagement with the gear to permit the support surface 562 to be freely raised by applying a pulling force on the second end portion 567 (or another portion) of the flexible wall 564, that securely engages the gear to lock the support surface 562 in place when the force is removed from the second end portion 567 of the flexible wall 564 (i.e., when it's released by the user), and that can again be displaced to release/free the flexible wall 564 to slide again so the support surface 564 can be returned to a lower position. Alternatively, the locking mechanism can include inter-engaging fasteners in the form of a hook-and-receiver arrangement of hooks (e.g., J-shaped or tabs) that engage any of a series of receivers (e.g., slots or holes), with the hooks or the receivers on the wall 564 and the other of the hooks or the receivers on the frame 520 or another/overlapping portion of the wall 564 (see for example the inter-engaging fasteners 571 a of the locking mechanism of **Figure 25A****).** In embodiments with the frame members 520 oriented horizontal at the top of the child-containment device 500 and vertical at the corners, the frame members 520 together define side openings, and the inner and outer portions of the overlapping peripheral walls 564 can be adjacent and contact each other with the locking mechanism including a plurality of inter-engaging fasteners in the form of elements on the inner and outer wall portions with respective pairs of the fasteners in alignment and releasably connectable in each of the respective configurations (see for example the inter-engaging fasteners 571 b of the locking mechanism of **Figure 25B****).** Other locking mechanisms known in the art can be included for example with inter-engaging fasteners in the form of snap-fit couplings, a spring-biased button and series of receiver holes for the button in its extended configuration, a zipper, hook-and-loop material, and other conventional structures for releasably securing two parts together. Also, a failsafe or backup locking mechanism can be included for redundancy for the safety of the contained/supported child in the event of a failure of the primary locking mechanism.

A synchronization system is included so that the peripheral walls 564 on different sides of the child-containment device 600 reposition together (i.e., moving/repositioning the wall on one side moves/repositions the walls on the other three sides) so the support surface 562 remains level in the various different positions and as its moved between the positions. In typical embodiments, the synchronization system includes inter-engaging synching elements that mechanically engage or link the adjacent flexible walls 564 of adjacent sides of the enclosure 550 so that they move together, and so moving one of the walls in turn causes the other three walls to move through the same motion such that only one wall needs to be moved to reconfigure the enclosure 550.

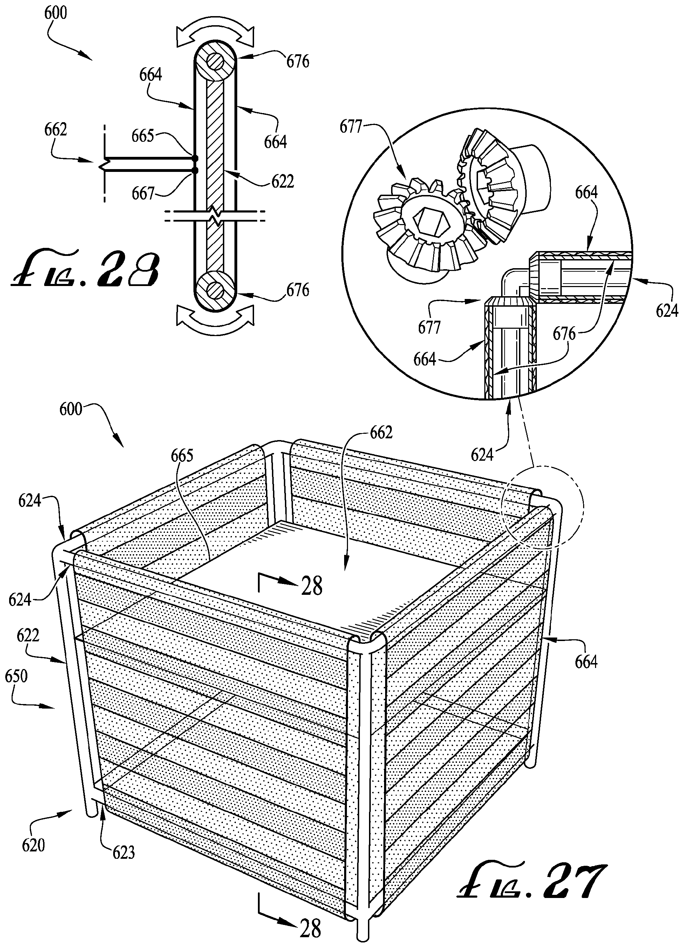

The inter-engaging synching elements are in the form of meshing miter gears on adjacent upper frame members 524 to provide the synchronized movement and control of the peripheral walls 564 on different sides of the child-containment device 500 (see also the embodiment of **Figure 27****).** In embodiments in which the frame 520 includes rollers that rotate relative to the upper frame members 524 as the corresponding flexible wall 564 is moved between positions, the synchronization system can be incorporated into the coaxial roller system for example by pinion gear of the type described above. In some embodiments, the corner frame members can be L-shaped (e.g., L-brackets) with each of the two perpendicular (to each other) frame sections extending into the space between the overlapping inner and outer wall portions 564 at each adjacent side of the enclosure 550 and including a track to which the inner and outer wall portions are slidably attached to enable their vertical movement (thereby forming a continuous peripheral-walled enclosure with no gap between adjacent walls through which a child could extend a hand and be injured), with incorporated synchronizing elements in the form of linkages (e.g., elastic sheets or strips) extending between the adjacent walls 564 and routed through or across the L-brackets (see for example the interconnecting linkages 573 of the synchronization system of **Figure 26****).** Furthermore, the locking mechanism can be incorporated into the synchronization system and/or the coaxial roller system.

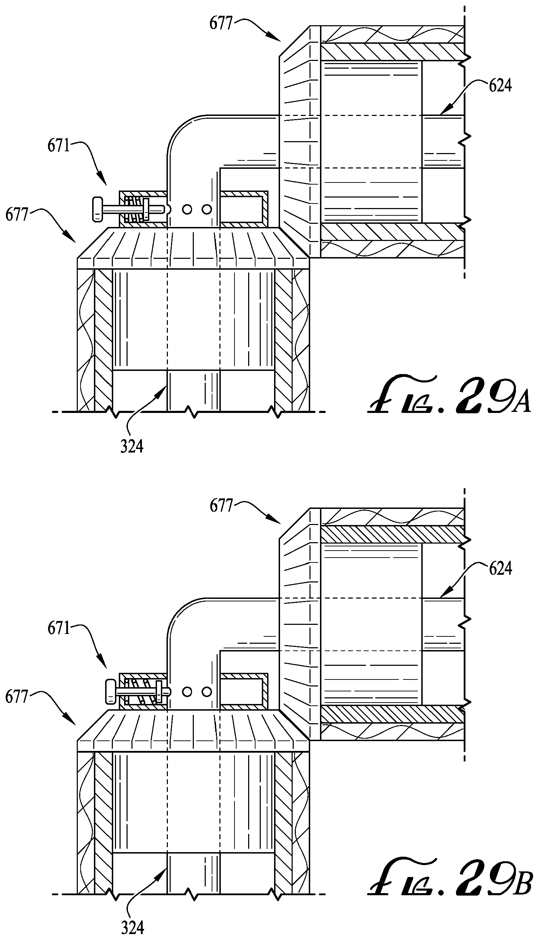

**Figures 27-32** show a child-containment device 600 according to the invention. The child-containment device 600 can have the same or substantially the same basic design and construction as any of the previously described embodiments. As such, the child-containment device 600 includes a structural support frame 620 and an elevator height adjusting (aka depth-adjustable) enclosure 650 supported by the frame 620.

In this embodiment, the structural support frame 620 includes lower horizontal frame members 623 on all sides and they are parallel to the horizontal upper frame members 624 with upright frame members 622 extending between the upper and lower frame members, and the flexible sidewall 664 is routed around the lower frame members 623 and the upper frame members 624 in a looped arrangement with the first and second end portions 665 and 667 of the flexible walls 664 connected to the support surface 662. So the flexible walls 664 are in an overlapping, double-walled arrangement along their entire height. This provides for a smooth operation and prevents bunching and wrinkling of the flexible sidewalls 664.

In addition, the lower and upper frame members 623 and 624 include rotational rollers 676 about which the flexible walls 664 are routed for smooth rolling travel of the flexible walls 664 around them, and the rollers 676 are operably connected together by a synchronization system for collective movement together (vertically moving one wall rotationally moves its roller which in turn rotationally moves the adjacent rollers which in turn vertically moves their walls in a coordinated manner). For example, the rollers 676 can have miter gears 677 at their ends so that the gears 677 of adjacent rollers 676 mesh for rotation together. This synchronized co-rotation provides for a smooth operation and helps keep the support surface 662 in a generally constant (e.g., horizontal) orientation.

In some embodiments, the flexible walls include control features for moving the support surface between its various positions. These can include knobs or finger-holes extending from or formed in the walls, or other structures enabling manual engagement by the hand of an adult caretaker for manual repositioning. Alternatively, these can include a motor that drives one of the miter gears, a power supply (e.g., batteries, power cord for connecting to house voltage, etc.) connected to the motor, and a control unit (e.g., for on/off and directional control) for controlling the motor.

Furthermore, the flexible walls 664 and their respective rollers 676 can be designed so that they move together with no or negligible slippage between them. For example, the rollers can have a textured surface for gripping the walls, a circumferential series of nubs that receive into a series (e.g., a vertical track or strip) of recesses in the walls, a pinion gear that meshes with a flexible rack gear along the walls, or other conventional structures (e.g., the seating, indexing, or catch members disclosed above) that prevent such slippage.

There can be four separate flexible walls 664 each moving over one of four horizontal upper frame members 624, as depicted, with corner gaps between adjacent individual flexible walls 664. To minimize or eliminate such gaps, the flexible walls 664 can each extend substantially the entire length of the horizontal upper frame members 624. And to complete the enclosure, corner wall panels (not depicted) can be provided to substantially close off any such gaps. In other embodiments, the enclosure can include corner L-brackets and/or vertical guide tracks (see for example Figure 26) to close off any gaps and form a continuously extending, peripherally enclosed space.

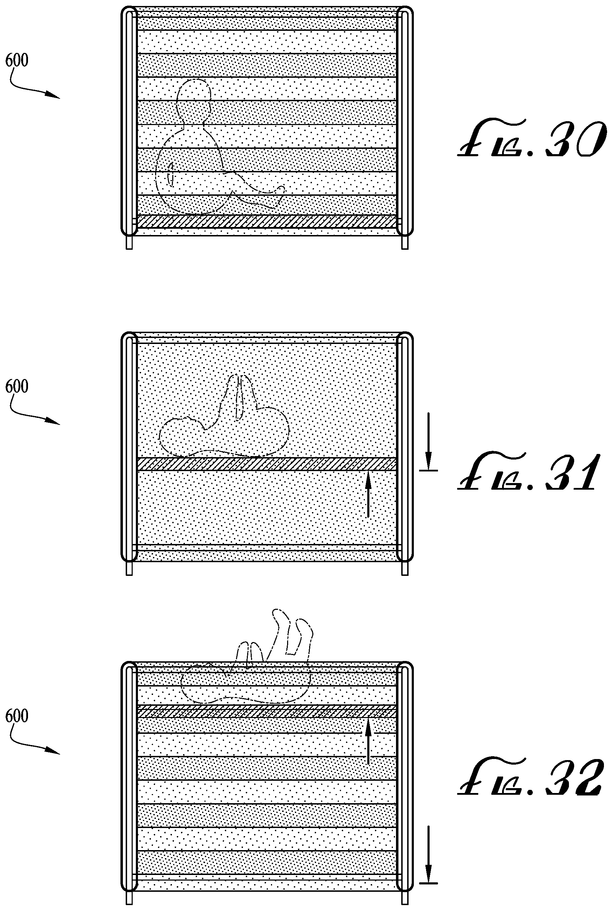

In use, pulling down on (or otherwise moving downward) an outer portion of the walls 664 causes the first end portion 665 and the connected support surface 662 to raise, and conversely pulling up on it causes the first end portion 665 and the connected support surface 662 to lower. In a typical commercial embodiment, for example, pulling down on the outer portion of the flexible wall 664 causes the first end portion 665 and the connected support surface 662 to raise from a play yard configuration with the support surface 662 in a first/lower position (Figure 30), to a sleeper/bassinet configuration with the support surface 662 in a second/intermediate position (Figure 31), and to a diaper-changing station configuration with the support surface 62 in a third/upper position (Figure 32).

As such, these embodiments provide for height adjustment (e.g., raising and lowering) of a support surface by use of redirected forces (pulling down to generate upward movement, and releasing upward to generate downward movement). Various embodiments thereby solve a number of problems, for example, fewer mechanics and piece-parts results in a lower cost and easier assembly/operation, built-in fabric management avoids bunching/wrinkling, easier operation results from the frame acting as a support (or pulley) and helping the load, and the eliminated need for a lock-and-key mechanism provides infinite/user-selected positions for height adjustment. Also, in embodiments using sheer materials for the enclosure sidewalls, when the support surface is in a lowered/down position, there is only one layer of the sidewall, which allows a person outside to see inside (and vice versa); when in an intermediate-height position, there are two layers of the sidewall, which allows a child inside to be shielded from more ambient light. Further, the parent would not have to bend over to pick up baby, instead they could just push down the outer wall to raise up the baby to the parent. In addition, the various embodiments meet all regulatory requirements when used as a play yard, sleeper/bassinet, changing table, etc., for example including depth requirements, redundancies for locking mechanisms, mechanisms for coupling to a bed when in the sleeper configuration, etc. Additional features and benefits relate to keeping the support surface and contents level/horizontal while raising and lowering it, providing the right amount of resistance, securing the height once selected, and/or preventing fraying of the sidewalls.

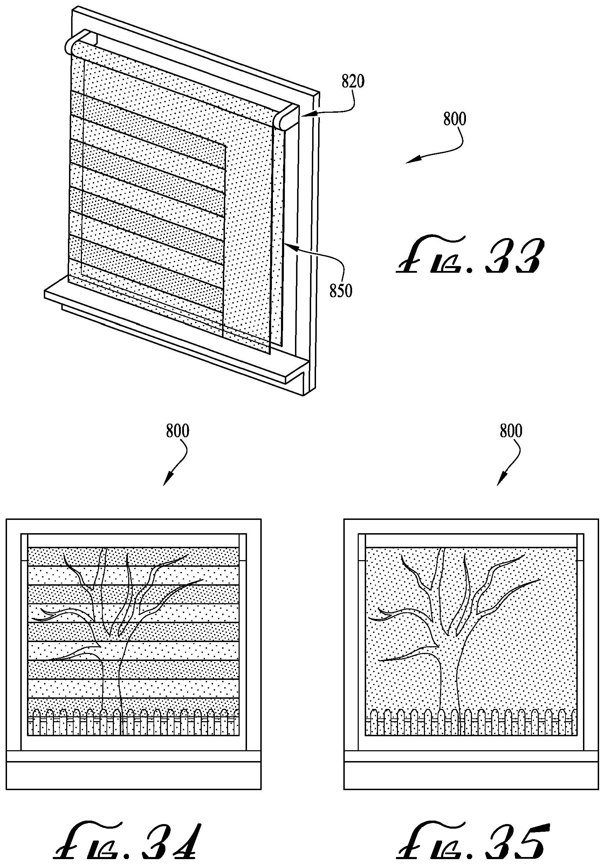

Figures 33-35 show a window shade device 800 according to another example which does not embody the invention. The window shade device 800 can have a somewhat similar design and construction as the previously described embodiments, for example it can have a structural support frame 820 and an elevator height adjusting (aka depth-adjustable) flexible overlapping sidewall or panel 850 supported by the frame 820. In the depicted example, for example, the window shade device 800 can be adjustable and convertible between a first configuration (Figure 34) and a second configuration (Figure 35), with the lighting adjusted by pulling one of the overlapping shade panels 850 down causing different portions of the shade panels to overlap, for example providing more light for daytime and less light for nighttime privacy. The shade panels 850 can be for example a mesh material with horizontal bands of contrasting densities. In the first configuration (Figure 34), lower density (more sheer) bands align/overlap to allow more light through (although at the same time higher density bands align/overlap and allow less light through them). And in the second configuration (Figure 35), the higher density (less sheer) bands do not align/overlap (or they do so only nominally), and instead higher and lower density bands align/overlap in an alternating/staggered arrangement with no lower density band not aligned with and overlapped by a higher density band, with the overlapping shade panels together effectively providing a continuous higher density. Also, a lock/retainer can be provided for releasably securing the shade panel 850 in a desired one of the configurations, a handle can be included for manually moving the shade panel 850, and a combination lock and handle assembly can be provided in some examples.

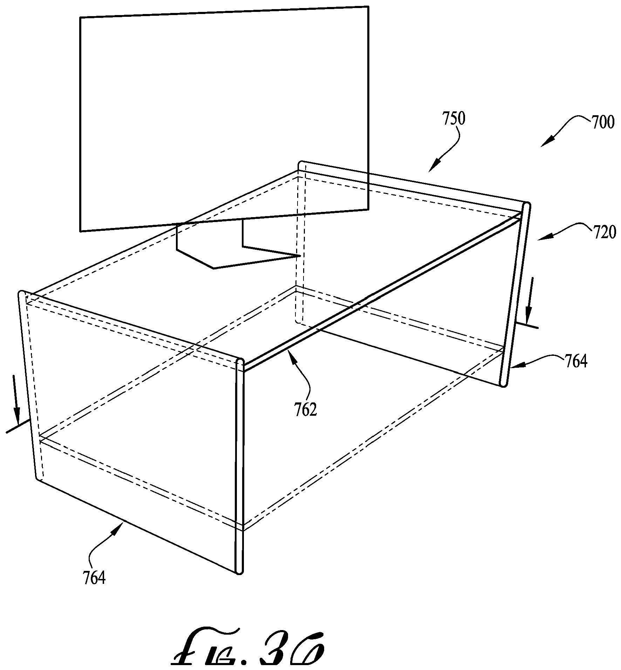

Figure 36 shows a display stand 700 according to another example. The display stand 700 can have a similar design and construction as the previously described embodiments, for example it can have a structural support frame 720 and an elevator height adjusting (aka depth-adjustable) enclosure 750 supported by the frame 720. In this example, however, the overlapping peripheral walls 764 of the enclosure 750 extend downward from the support surface 762 so that the support surface 762 can be used to support for example a computer monitor, a television, or another electronic device, without visual obstruction from the peripheral walls 764. As such, the enclosure 750 is inverted relative to the above-described embodiments for containing or at least storing objects (electrical wires, cable boxes, surge protectors, etc.) below the support surface 762 and hidden from outside view in at least some examples or configurations. In the depicted example, for example, the computer monitor stand 700 can be adjustable and convertible between a lowered/stored configuration and a raised/use configuration. So the height of the computer monitor on the support surface 762 can be adjusted by moving the outer of the peripheral walls 764 up or down to cause the inner of the peripheral walls 764 and the monitor support platform 762 to move up or down, respectively. In some examples such as that depicted, the peripheral walls 764 are located on two opposite peripheral sides only and do not form an enclosure, and a linkage can be provided to synchronize their movement so that moving the wall at one end also moves the wall at the opposite end to raise and lower the support platform in a level orientation. Also, a lock/retainer can be provided for releasably securing the support surface 762 (directly, or indirectly by releasably securing the peripheral walls 764) in a desired one of the vertical positions, a handle can be included (e.g., on the outer of the peripheral walls 764) for manually moving the peripheral walls 764 and thus the support surface 762, and a combination lock and handle assembly can be provided in some examples.

Other contemplated examples that have an adapted form of the elevator height adjustment feature include height-adjustable platform beds, "director" chairs, cabinet shelves, tabletops, desks, entertainment centers, and curtains.

While the invention has been described with reference to preferred and example embodiments, it will be understood by those skilled in the art that a variety of modifications, additions and deletions are within the scope of the invention, as defined by the following claims.

## Claims

1. A child-containment device (600), comprising:
a structural support frame (620) including a plurality of peripheral upper frame members ( 624) and a plurality of upright frame members (622) supporting the peripheral upper frame members (624); and
a depth-adjustment enclosure (650) supported by the structural support frame (620), wherein the depth-adjustment enclosure (650) includes a support surface (662) and a plurality of peripheral flexible walls (664) connected to the support surface (662) and together defining an internal containment volume, wherein the peripheral flexible walls (664) are routed around the peripheral upper frame members (624) in an overlapping double-walled arrangement with each of the peripheral flexible walls (664) having an inner wall portion within the internal containment volume and an outer wall portion outside of the internal containment volume and at least partially overlapping with the inner wall portion, and wherein the peripheral flexible walls (664) are vertically slidable relative to the structural support frame (620) to reposition/adjust the support surface to a plurality of different vertical positions forming a plurality of different configurations of the child-containmenl device (600);
a synchronization system including inter-engaging synching elements that operably link adjacent ones of the peripheral flexible walls (664) on different sides of the child-containment device (600) so that the linked adjacent peripheral flexible walls (664) move and reposition together between the configurations, **characterized in that** the inter-engaging synching elements include meshing gears (677) on adjacent ones of the peripheral upper frame members (624).

2. The child-containment device of Claim 1, wherein the plurality of flexible walls are separate from one another.

3. The child-containment device of Claim 1 or 2, wherein the frame includes a plurality of peripheral lower frame members (623) parallel to the upper frame members and around which the walls are routed, and wherein the walls have first end portions (665) and second opposite end portions (667) both connected to the support surface to form a continuous loop with the inner wall portions and the outer wall portion overlapping along their entire height.

4. The child-containment device of Claim 1 or 2, wherein the flexible walls have first end portions (565) and second opposite end portions (567), with the first end portions defined by the inner wall portions and connected to the support surface, and with the second end portions defined by the outer wall portions.

5. The child-containment device of Claim 1, wherein further comprising a locking system including inter-engaging fasteners that releasably secure the support surface in the plural configurations.

6. The child-containment device of any preceding Claim, wherein the upright frame members are L-shaped with perpendicular portions extending between the inner and outer wait portions of adjacent flexible walls to close off any gaps between the adjacent flexible walls.

7. The child-containment device of any preceding Claim, wherein in a given one of the configurations, the inner wall portion and the connected support surface move upward in response to downward movement of the outer wall portion.

8. The child-containment device of any preceding Claim, wherein the plurality of configurations include at least two of a play yard configuration, a bassinet/sleeper configuration, and a diaper-changing configuration.

9. The child-containment device of any preceding Claim, wherein the plurality of configurations include a first configuration with the support surface positioned at a first lowered position and second configuration with the support surface positioned at a second position higher than the first position.

10. The child-containment device of Claim 9, wherein with the support surface in the highersecond position, less of the flexible wall remains between the support surface and the upper frame member there by defining the innerwall portion with a smaller height than in the first configuration.

11. The child-containment device of any preceding Claim, wherein the support surface includes a mattress.

12. The child-containment device of any preceding Claim, wherein the flexible walls are made of a fabric material.

## Patentansprüche

1. Kindersicherungsvorrichtung (600), umfassend:
einen strukturellen Stützrahmen (620), der eine Vielzahl von oberen Umfangsrahmengliedern (624) und
eine Vielzahl von aufrechten Rahmengliedern (622) aufweist, die die oberen Umfangsrahmenglieder (624) stützen, und
eine von dem strukturellen Stützrahmen (620) gestützte tiefenverstellbare Einfassung (650), wobei die tiefenverstellbare Einfassung (650) eine Stützfläche (662) und eine Vielzahl von flexiblen Umfangswänden (664) aufweist, die mit der Stützfläche (662) verbunden sind und zusammen ein inneres Sicherungsvolumen definieren, wobei die flexiblen Umfangswände (664) in einer überlappenden doppelwandigen Anordnung um die oberen Umfangsrahmenglieder (624) herum geführt sind, wobei die flexiblen Umfangswände (664) jeweils einen inneren Wandabschnitt innerhalb des inneren Sicherungsvolumens und einen äußeren Wandabschnitt außerhalb des inneren Sicherungsvolumens, der den inneren Wandabschnitt mindestens teilweise überlappt, haben und wobei die flexiblen Umfangswände (664) bezüglich des strukturellen Stützrahmens (620) vertikal verschiebbar sind, um die Stützfläche zu einer Vielzahl von verschiedenen vertikalen Positionen, die eine Vielzahl von verschiedenen Konfigurationen der Kindersicherungsvorrichtung (600) bilden, umzupositionieren/zu verstellen,
ein Synchronisierungssystem, das ineinander eingreifende Synchronisierelemente aufweist, die benachbarte der flexiblen Umfangswände (664) an unterschiedlichen Seiten der Kindersicherungsvorrichtung (600) miteinander wirkverbinden, so dass sich die verbundenen benachbarten flexiblen Umfangswände (664) zusammen zwischen den Konfigurationen bewegen und umpositionieren, **dadurch gekennzeichnet, dass** die ineinander eingreifenden Synchronisierelemente an benachbarten der oberen Umfangsrahmenglieder (624) Gegenräder (677) aufweisen.

2. Kindersicherungsvorrichtung nach Anspruch 1, wobei die Vielzahl von flexiblen Wänden voneinander getrennt sind.

3. Kindersicherungsvorrichtung nach Anspruch 1 oder 2, wobei der Rahmen eine Vielzahl von unteren Umfangsrahmengliedern (623) aufweist, die parallel zu den oberen Rahmengliedern verlaufen und um die herum die Wände geführt sind, und wobei die Wände erste Endabschnitte (665) und gegenüberliegende zweite Endabschnitte (667) haben, die beide mit der Stützfläche verbunden sind, um eine durchgehende Schlaufe mit den inneren Wandabschnitten und dem äußeren Wandabschnitt zu bilden, die ihre gesamte Höhe überlappt.

4. Kindersicherungsvorrichtung nach Anspruch 1 oder 2, wobei die flexiblen Wände erste Endabschnitte (565) und gegenüberliegende zweite Endabschnitte (567) haben, wobei die ersten Endabschnitte von den inneren Wandabschnitten definiert und mit der Stützfläche verbunden sind und wobei die zweiten Endabschnitte von den äußeren Wandabschnitten definiert sind.

5. Kindersicherungsvorrichtung nach Anspruch 1, ferner umfassend ein Verriegelungssystem, das ineinander eingreifende Befestigungselemente aufweist, die die Stützfläche in den mehreren Konfigurationen freigebbar befestigen.

6. Kindersicherungsvorrichtung nach einem der vorhergehenden Ansprüche, wobei die aufrechten Rahmenglieder L-förmig sind und senkrechte Abschnitte aufweisen, die sich zwischen den inneren und äußeren Wandabschnitten benachbarter flexibler Wände erstrecken, um etwaige Spalte zwischen den benachbarten flexiblen Wänden zu verschließen.

7. Kindersicherungsvorrichtung nach einem der vorhergehenden Ansprüche, wobei sich der innere Wandabschnitt und die verbundene Stützfläche in einer gegebenen der Konfigurationen als Reaktion auf eine nach unten gehende Bewegung des äußeren Wandabschnitts nach oben bewegen.

8. Kindersicherungsvorrichtung nach einem der vorhergehenden Ansprüche, wobei die Vielzahl von Konfigurationen mindestens zwei einer Laufstallkonfiguration, einer Stubenwagen/Wiegen-Konfiguration und einer Windelwechselkonfiguration aufweisen.

9. Kindersicherungsvorrichtung nach einem der vorhergehenden Ansprüche, wobei die Vielzahl von Konfigurationen eine erste Konfiguration, bei der die Stützfläche in einer ersten abgesenkten Position positioniert ist, und eine zweite Konfiguration, bei der die Stützfläche in einer zweiten Position positioniert ist, die höher als die erste Position ist, aufweisen.

10. Kindersicherungsvorrichtung nach Anspruch 9, wobei weniger von der flexiblen Wand zwischen der Stützfläche und dem oberen Rahmenglied verbleibt, wenn die Stützfläche in der höheren zweiten Position ist, wodurch der innere Wandabschnitt mit einer geringeren Höhe als in der ersten Konfiguration definiert wird.

11. Kindersicherungsvorrichtung nach einem der vorhergehenden Ansprüche, wobei die Stützfläche eine Matratze aufweist.

12. Kindersicherungsvorrichtung nach einem der vorhergehenden Ansprüche, wobei die flexiblen Wände aus einem Gewebematerial hergestellt sind.

## Revendications

1. Dispositif de réception d'enfant (600), comprenant :
une armature de support structurel (620) comprenant une pluralité d'éléments d'armature périphériques supérieurs (624) et une pluralité d'éléments d'armature verticaux (622) supportant les éléments d'armature périphériques supérieurs (624) ; et
une enceinte réglable en profondeur (650) supportée par l'armature de support structurel (620), l'enceinte réglable en profondeur (650) comprenant une surface de support (662) et une pluralité de parois périphériques souples (664) raccordées à la surface de support (662) et définissant conjointement un volume de réception intérieur, les parois périphériques souples (664) étant guidées autour des éléments d'armature périphériques supérieurs (624) en un agencement superposé à paroi double, chacune des parois périphériques souples (664) comportant une partie intérieure de paroi à l'intérieur du volume de réception intérieur et une partie extérieure de paroi à l'extérieur du volume de réception intérieur et au moins partiellement superposée avec la partie intérieure de paroi, et les parois périphériques souples (664) étant aptes à glisser verticalement par rapport à l'armature de support structurel (620) afin de repositionner/d'ajuster la surface de support dans une pluralité de positions verticales différentes formant une pluralité de configurations différentes du dispositif de réception d'enfant (600) ;
un système de synchronisation comprenant des éléments de synchronisation coopérants qui lient de manière fonctionnelle des parois adjacentes parmi les parois périphériques souples (664) sur des côtés différents du dispositif de réception d'enfant (600) de telle sorte que les parois périphériques souples (664) adjacentes liées se déplacent et se repositionnent ensemble entre les configurations, **caractérisé en ce que** les éléments de synchronisation coopérants comprennent des roues d'engrenage engrenées (677) sur des éléments adjacents parmi les éléments d'armature périphériques supérieurs (624) .

2. Dispositif de réception d'enfant selon la revendication 1, dans lequel la pluralité de parois souples sont séparées les unes des autres.

3. Dispositif de réception d'enfant selon la revendication 1 ou 2, dans lequel l'armature comprend une pluralité d'éléments d'armature périphériques inférieurs (623) parallèles aux éléments d'armature supérieurs et autour desquels sont guidées les parois, et dans lequel les parois comportent des premières parties d'extrémité (665) et des secondes parties d'extrémité (667) opposées toutes raccordées à la surface de support pour former une boucle continue avec les parties intérieures de paroi et les parties extérieures de paroi superposées le long de leur hauteur entière.

4. Dispositif de réception d'enfant selon la revendication 1 ou 2, dans lequel les parois souples comportent des premières parties d'extrémité (565) et des secondes parties d'extrémité (567) opposées, les premières parties d'extrémité étant définies par les parties intérieures de paroi et raccordées à la surface de support, et les secondes parties d'extrémité étant définies par les parties extérieures de paroi.

5. Dispositif de réception d'enfant selon la revendication 1, comprenant en outre un système de verrouillage comprenant des éléments de fixation coopérants qui assujettissent de manière libérable la surface de support dans les multiples configurations.

6. Dispositif de réception d'enfant selon l'une quelconque des revendications précédentes, dans lequel les éléments d'armature verticaux sont en forme de L avec des parties perpendiculaires s'étendant entre les parties intérieures et extérieures de paroi de parois souples adjacentes pour fermer tout espacement entre les parois souples adjacentes.

7. Dispositif de réception d'enfant selon l'une quelconque des revendications précédentes, dans lequel, dans une configuration donnée, la partie intérieure de paroi et la surface de support raccordée se déplacent vers le haut en réaction à un déplacement vers le bas de la partie extérieure de paroi.

8. Dispositif de réception d'enfant selon l'une quelconque des revendications précédentes, dans lequel la pluralité de configurations comprennent au moins deux configurations parmi une configuration de parc, une configuration de couffin/berceau et une configuration de table à langer.

9. Dispositif de réception d'enfant selon l'une quelconque des revendications précédentes, dans lequel la pluralité de configurations comprennent une première configuration dans laquelle la surface de support est placée dans une première position abaissée et une deuxième configuration dans laquelle la surface de support est placée dans une deuxième position plus élevée que la première position.

10. Dispositif de réception d'enfant selon la revendication 9, dans lequel, lorsque la surface de support se trouve dans la deuxième position plus élevée, il reste une partie moindre de la paroi souple entre la surface de support et l'élément d'armature supérieur de sorte que la partie intérieure de paroi présente une hauteur moindre par rapport à la première configuration.

11. Dispositif de réception d'enfant selon l'une quelconque des revendications précédentes, dans lequel la surface de support comprend un matelas.

12. Dispositif de réception d'enfant selon l'une quelconque des revendications précédentes, dans lequel les parois souples sont faites d'un matériau textile.
